# EUROPEAN PATENT SPECIFICATION

(11) **EP 2 615 023 B1**
(45) Date of publication and mention of the grant of the patent: **21.12.2016**
(21) Application number: 11823212.3
(22) Date of filing: 26.08.2011
(51) Int. Cl.: B62M 6/70, B62M 1/10, B62M 21/00

(54) **ELECTRIC BICYCLE**
ELEKTRISCHES FAHRRAD
BICYCLETTE ÉLECTRIQUE

(30) Priority: 08.09.2010 JP 2010200416
(43) Date of publication of application: 17.07.2013
(73) Proprietor: Panasonic Corporation, Osaka 571-8501 (JP); NTN Corporation, Osaka-shi, Osaka 550-0003 (JP)
(72) Inventor: ITOMI, Shoji, Kuwana City, Mie 511-8678 (JP); TSURUOKA, Kouichirou, Osaka 540-6207 (JP); UMEZAWA, Norio, Osaka 540-6207 (JP)
(74) Representative: Grünecker Patent- und Rechtsanwälte PartG mbB
(86) International application number: PCT/JP2011/004756
(87) International publication number: WO 2012/032731

(56) References cited:
- JP-A- 2004 268 843
- JP-A- 2008 017 539
- JP-A- 2010 095 203

## Description

### Technical Field

The present invention relates to an electric bicycle that can be driven by an auxiliary driving force generated by an electric motor in addition to human power generated by a pedal force from pedals and can perform a regeneration operation for rotating the electric motor by the torque of wheels during an braking operation and so on to charge a battery according to the preamble of claim 1.

### Background Art

An electric bicycle according to the preamble of claim 1 is already known from JP 2010 095 203 A. A known electric bicycle has a battery and a motor drive unit including an electric motor fed with power from the battery. The electric bicycle can be smoothly driven uphill by adding an auxiliary driving force (assistance force) of the motor drive unit to human power generated by a pedal force to a pedal. Another known electric bicycle of this type has a structure in which regenerative electric power is generated by a rotating electric motor in line with a rotation of a wheel during a braking operation and so on to charge a battery and a running distance is increased according to the number of battery charging.

For example, in a technique disclosed by Patent Literature 1, regenerative control is performed by using an electric motor located in the hub of a front wheel as a generator during a braking operation.

As an advantage of such an electric bicycle which performs regenerative control with the electric motor located in the front wheel, a regeneration operation can be performed with a relatively simple structure having the electric motor in the center of the hub of the rotating front wheel.

However, the electric bicycle which performs regenerative control with the electric motor located in the hub of the front wheel has the following disadvantage in addition to the advantage. The control part of the electric bicycle located in the front wheel or a rear wheel may be adversely affected by vibrations transmitted directly from the ground plane. Thus, the front and rear wheels are not preferable positions where the control part is located. In many cases, generally, the control part is located at an intermediate position between the front wheel and the rear wheel, for example, behind a bracket lug with a bearing for rotatably supporting a crankshaft and so on provided thereon or near the bracket lug. Thus, an electric motor part including the electric motor and the control part are inevitably separated from each other and cannot be configured as an integral unit. Hence, components such as a housing are required for the respective parts, resulting in increase in the number of components and manufacturing cost.

Further, since a wire for connecting the control part and the electric motor has to be laid along a main frame and a front fork, the wire is extended, increasing the possibility of damage to the wire. Moreover, since the electric motor is located in the hub of the front wheel, the weight of the front wheel increases, and thus the weight balance of the electric bicycle is disadvantageously shifted forward. When a regeneration operation is performed, since only the speed of the front wheel decreases, a braking operation is performed with the rear wheel positioned in a floating manner. Thus, the safety of the electric bicycle may be lowered. For this reason, a regeneration operation cannot be performed without hesitation because the regeneration operation increases the braking force of the front wheel.

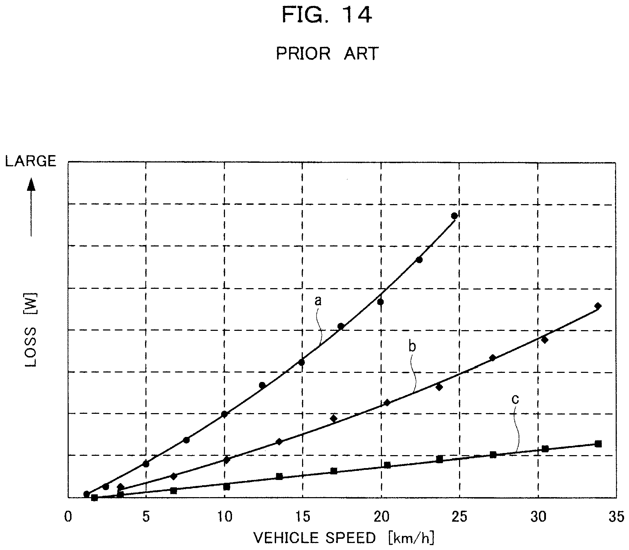

The electric bicycle including the electric motor located in the hub of the front wheel to perform a regeneration operation has a structure in which the hub has a multiple-stage speed reducer such as an epicyclic gear in addition to the stator or rotor of the electric motor directly connected to the hub. Thus, as indicated by a curve a of FIG. 14, the loss of force largely increases with the vehicle speed. Disadvantageously, a force is further required to pedal the electric bicycle, causing a heavy feeling.

An electric bicycle configured to prevent the above-described disadvantages is disclosed in FIG. 8 and so on of Patent Literature 2. The electric bicycle includes a motor drive unit located at an intermediate position between the front and rear wheels of the electric bicycle. The motor drive unit integrally includes an electric motor, an auxiliary-driving-force output sprocket for outputting an auxiliary driving force, a control part, and so on. Further, a driving force transmitting chain for transmitting a rotation of a crank shaft with pedals attached thereto is engaged with the auxiliary-driving-force output sprocket for outputting an auxiliary driving force of the motor drive unit. Moreover, the driving force transmitting chain is used as a transmitting member for transmitting a rotation of the rear wheel to the auxiliary-driving-force output sprocket during regeneration running. In this configuration, during regeneration running, a rotation of the rear wheel is transmitted to the electric motor via the driving force transmitting chain to perform a regeneration operation.

In this configuration, the motor drive unit is located at the intermediate position between the front and rear wheels of the electric bicycle, thereby integrating the electric motor and the control part to reduce the number of components. Further, the weight balance of the electric bicycle is favorably kept, thereby improving the running stability. When a regeneration operation is performed, since the vehicle speed decreases on the rear wheel side, the safety of the electric bicycle is satisfactorily kept without causing the rear wheel to be positioned in a floating manner. Since the driving force transmitting chain can be used for transmitting a rotation of the rear wheel to the auxiliary-driving-force output sprocket during regeneration running in addition to transmitting human power from the pedals and an auxiliary driving force generated by the electric motor to the rear wheel, various forces can be transmitted via the single chain, advantageously suppressing increase in the number of components.

A curb b of FIG. 14 indicates the loss of force with respect to the vehicle speed, in the case where the auxiliary-driving-force output sprocket for outputting an auxiliary driving force is directly connected to the output shaft of the electric motor, in the electric bicycle configured to transmit a force to the electric motor via the driving force transmitting chain during regeneration running. Such an electric bicycle is configured to transmit a force to the electric motor via the driving force transmitting chain during regeneration running but not to reduce the vehicle speed by means of a multiple-stage speed reducer such as an epicyclic gear. Thus, as understood from comparison between the curb a (the loss of force with respect to the vehicle speed in the case of the electric bicycle containing the hub) and the curb b, the loss of force can be reduced as compared to that in the case of the electric bicycle containing the hub.

However, in the motor drive unit of such an electric bicycle in which the auxiliary-driving-force output sprocket for outputting an auxiliary driving force is directly connected to the output shaft of the electric motor, even when the electric bicycle runs without an auxiliary driving force (hereinafter, will be referred to as pedaling), the electric motor constantly rotates, requiring a large force for rotating the pedals. In order to address the problem, a changeover clutch may be interposed on a transmission path between the motor output shaft as the output shaft of the electric motor and the auxiliary-driving-force output shaft with the auxiliary-driving-force output sprocket attached thereto in the motor drive unit to switch such that the auxiliary-driving-force sprocket and the motor output shaft are turned to a free state (release state) during pedaling. This configuration is disclosed by Patent Literature 2. In the configuration, as indicated by a curb c of FIG. 14, since the electric motor is separated from the force transmission path, a force for rotating the pedals can be reduced, so that the loss of force can be further reduced with respect to the vehicle speed during pedaling.

### Citation List

### Patent Literatures

Patent Literature 1: Japanese Patent Laid-Open No. 2004-149001
Patent Literature 2: Japanese Patent Laid-Open No. 2004-268843

### Summary of Invention

### Technical Problem

However, even in the case where the motor drive unit is located at the intermediate position between the front and rear wheels of the electric bicycle, a force is transmitted to the electric motor via the driving force transmitting chain during regeneration running, and the changeover clutch is interposed on the transmission path between the motor output shaft and the auxiliary-driving-force output shaft in the motor drive unit, when the electric bicycle is switched to regeneration running, that is, the electric bicycle is switched such that a force from the driving force transmitting chain is transmitted to the output shaft of the electric motor, a large shock and sound are highly likely to occur, thereby providing a rider with an uncomfortable or unpleasant feeling. Further, since a large shock is rapidly applied to components such as a speed reducing mechanism provided on the transmission path between the output shaft of the electric motor and the auxiliary-driving-force output shaft, the life spans of the components may be shortened.

The present invention has been devised to solve the problem. An object of the present invention is to provide an electric bicycle which can keep favorable running stability with a motor drive unit located at an intermediate position between the front and rear wheels of the electric bicycle as well as minimizing reduction in the loss of force during running and can prevent the occurrence of a large shock and sound even when the electric bicycle is switched to regeneration running. Another object of the present invention is to provide an electric bicycle which can increase the life spans of components as well.

### Solution to Problem

In order to solve the problem, the present invention is an electric bicycle which can be driven by an auxiliary driving force generated by an electric motor fed with power from a battery in addition to human power generated by a pedal force from pedals and perform a regeneration operation for charging the battery by using a passive driving force received by a rear wheel from the ground plane during passive running to rotate the electric motor, the electric bicycle comprising: a motor drive unit including the electric motor, an auxiliary-driving-force output ring body for outputting an auxiliary driving force, and a control part located at an intermediate position between a front wheel and the rear wheel; an endless driving force transmitting member for transmitting a pedal force from the pedals to the rear wheel, the endless driving force transmitting member being capable of transmitting a passive driving force received by the rear wheel during the passive running and being engaged with the auxiliary-driving-force output ring body of the motor drive unit; and an input/output changeover clutch for switching a force transmission direction and a damper provided on a force transmission path between a motor output shaft serving as the output shaft of the electric motor and an auxiliary driving force output shaft with the auxiliary-driving-force output ring body attached thereto in the motor drive unit, wherein the input/output changeover clutch is switched between an output state in which a driving force of the electric motor can be transmitted to the auxiliary-driving-force output shaft and an input state in which the passive driving force from the rear wheel can be transmitted to the electric motor, and the damper reduces a shock during clutch connection.

More specifically, when the electric bicycle is switched from coasting or running without assistance to regeneration running, the input/output changeover clutch is switched from an output free state in which a rotation of the auxiliary-driving-force output ring body of the motor drive unit is not transmitted to the electric motor in the output state to an input lock state in which the passive driving force from the rear wheel is transmitted to the electric motor in the input state, and the damper reduces a shock during clutch connection when the output free state is switched to the input lock state.

Further, when the electric bicycle is switched from assistance running to regeneration running, the input/output changeover clutch is switched from an output lock state in which a driving force of the electric motor is transmitted to the auxiliary-driving-force output shaft in the output state to an input lock state in which the passive driving force from the rear wheel is transmitted to the electric motor in the input state, and the damper reduces a shock during clutch connection when the output lock state is switched to the input lock state.

Moreover, when the electric bicycle is switched from regeneration running to assistance running, the input/output changeover clutch is switched from an input lock state in which the passive driving force from the rear wheel is transmitted to the electric motor in the input state to an output lock state in which a driving force of the electric motor is transmitted to the auxiliary-driving-force output shaft in the output state, and the damper reduces a shock during clutch connection when the input lock state is switched to the output lock state.

Furthermore, when the electric bicycle is switched from coasting or running without assistance to assistance running, the input/output changeover clutch is switched from an output free state in which a rotation of the auxiliary-driving-force output ring body of the motor drive unit is not transmitted to the electric motor in the output state to an output lock state in which a driving force of the electric motor is transmitted to the auxiliary-driving-force output shaft in the output state, and the damper reduces a shock during clutch connection when the output free state is switched to the output lock state.

Preferably, the regeneration operation is performed in synchronization with a braking operation.

In the above-described configuration, on the force transmission path between the motor output shaft and the auxiliary-driving-force output shaft in the motor drive unit, provided are not only the input/output changeover clutch for switching the force transmission direction but also the damper for reducing a shock during clutch connection. Thus, a shock and sound during clutch connection can be reduced when the electric bicycle is switched to regeneration running, thereby preventing a rider from feeling uncomfortable or unpleasant. Further, since the damper reduces a shock during clutch connection, reduction in the life spans of the components provided on the transmission path between the output shaft of the electric motor and the auxiliary-driving-force output shaft can be minimized. Thus, the life span of the electric bicycle can be increased as compared to that of an electric bicycle having no damper. Advantageously, a thick component (gear) having an extremely large strength and so on are not required as the components provided on the transmission path between the output shaft of the electric motor and the auxiliary-driving-force output shaft.

### Advantageous Effects of Invention

According to the present invention, since the damper for reducing a shock during clutch connection is provided on the transmission path between the output shaft of the electric motor and the auxiliary-driving-force output shaft with the auxiliary-driving-force output ring body attached thereto in the motor drive unit, even when the electric bicycle is switched to regeneration running, a shock and sound during clutch connection can be reduced, preventing a rider from feeling uncomfortable or unpleasant. Further, since the damper reduces a shock during clutch connection, reduction in the life spans of the components provided on the transmission path between the output shaft of the electric motor and the auxiliary-driving-force output shaft can be minimized. Thus, the life span of the electric bicycle can be extended as compared to that of an electric bicycle having no damper. A thick component (gear) having an extremely large strength and so on are not required as the components provided on the transmission path between the output shaft of the electric motor and the auxiliary-driving-force output shaft, so that the size of the motor drive unit can be reduced.

### Brief Description of Drawings

[FIG. 1] FIG. 1 is an overall side view showing an electric bicycle according to an embodiment of the present invention.
[FIG. 2] FIG. 2 is a partially cutaway side view of the electric bicycle.
[FIG. 3] FIG. 3 is a perspective view showing a motor drive unit and the vicinity thereof in the electric bicycle according to the embodiment.
[FIG. 4] FIG. 4 is a top cross-sectional view schematically showing the motor drive unit of the electric bicycle according to the embodiment.
[FIG. 5] FIG. 5 is a drawing schematically showing a handlebar and braking devices of the electric bicycle according to the embodiment.
[FIG. 6] FIG. 6 is an enlarged top cross-sectional view showing the major part of the motor drive unit of the electric bicycle according to the embodiment.
[FIG. 7] FIGS. 7(a) and 7(b) are a left side view and a top cross-sectional view showing a speed reducing gear in the motor drive unit of the electric bicycle according to the embodiment.
[FIG. 8] FIG. 8(a) is a cross-sectional view taken along the arrows B-B of FIG. 6; and FIG. 8(b) is a cross-sectional view taken along the arrows A-A of FIG. 6.
[FIG. 9] FIG. 9 is a perspective view showing a speed reducing gear, a damper, and a torque transmission plate in the motor drive unit of the electric bicycle according to the embodiment.
[FIG. 10] FIG. 10 is a drawing simplistically showing whether or not to allow an outer ring and an inner ring of an input/output changeover clutch to rotate in an output state and an input state.
[FIG. 11] FIG. 11(a) is a drawing simplistically showing an operation of a driving force transmitting chain and so on during assistance running; and FIG. 11(b) is a drawing simplistically showing an operation of the driving force transmitting chain and so on during coasting.
[FIG. 12] FIG. 12(a) is a drawing simplistically showing an operation of the driving force transmitting chain and so on during pedaling; and FIG. 12(b) is a drawing simplistically showing an operation of the driving force transmitting chain and so on during regeneration running.
[FIG. 13] FIG. 13 is a drawing simplistically showing an operation of the driving force transmitting chain and so on during backward-pushing.
[FIG. 14] FIG. 14 is a drawing showing the loss of force with respect to a vehicle speed in the case where an auxiliary-driving-force output sprocket for outputting an auxiliary driving force is directly connected to a motor output shaft of an electric motor in an electric bicycle.

### Description of Embodiments

Referring to the accompanying drawings, the following will describe an electric bicycle according to an embodiment of the present invention.

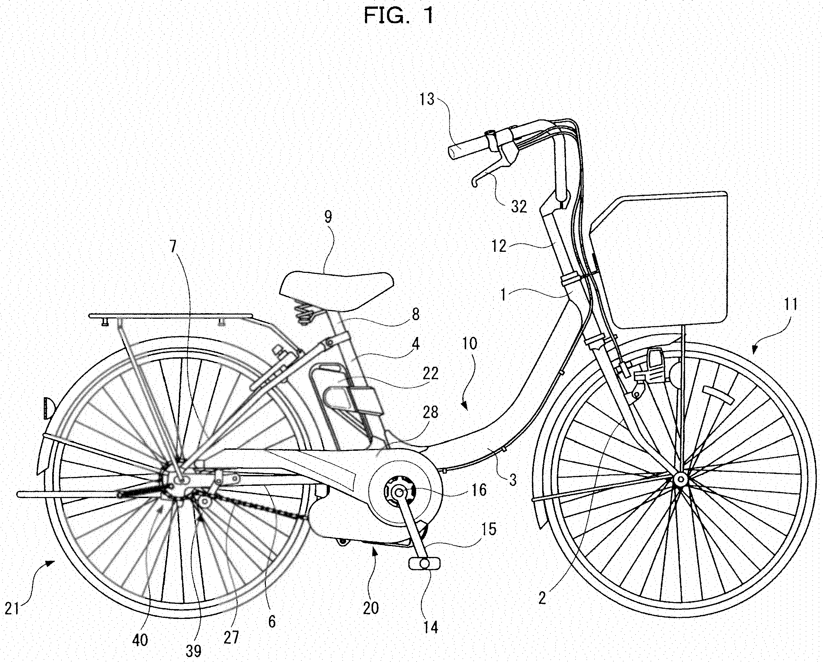

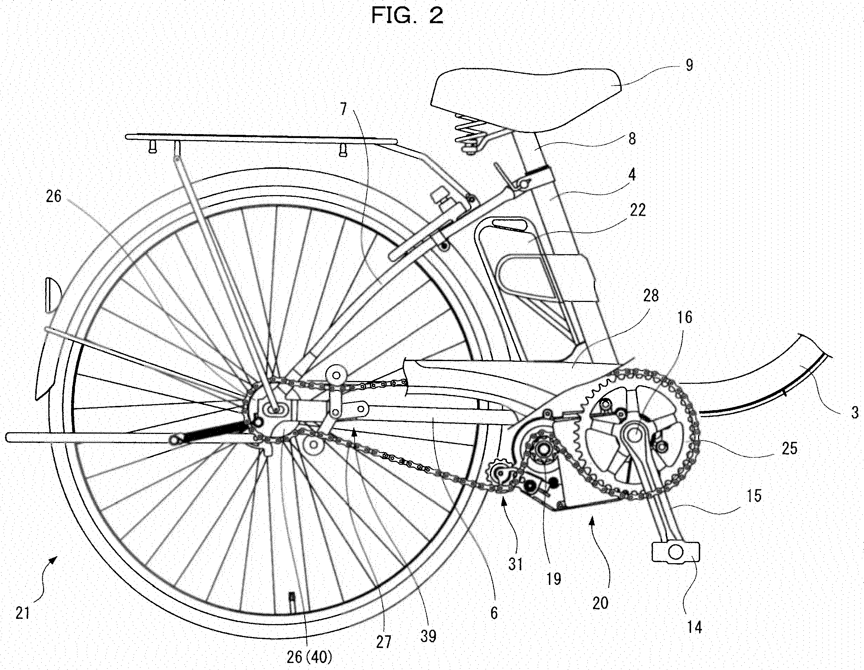

As shown in FIGS. 1 and 2, the electric bicycle according to the embodiment of the present invention includes a skeleton frame 10, a front wheel 11, a handlebar stem 12 and a handlebar 13, a saddle 9, pedals 14, a motor drive unit 20, a rear wheel 21, a battery 22, a front sprocket (a so-called crank gear) 25 serving as a human power output ring body, a rear sprocket (a so-called hub gear) 26 serving as a rear ring body, a driving force transmitting chain 27 serving as an endless driving force transmitting member, a chain cover 28, a tensioner device 39, and so on.

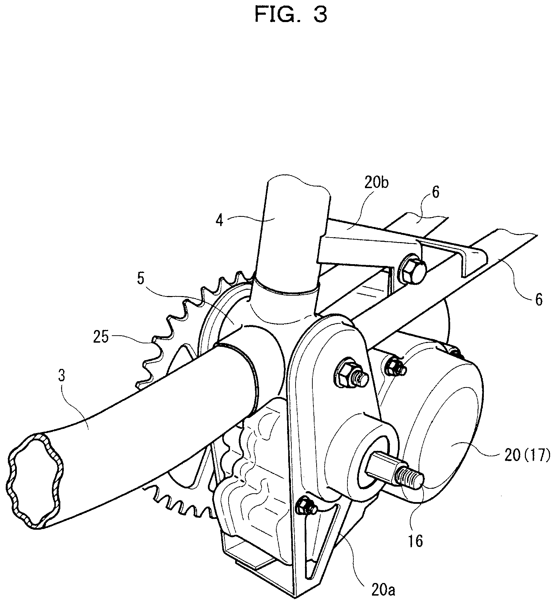

As shown in FIGS. 1 to 4, the skeleton frame 10 includes a head pipe 1, a front fork 2, a main frame 3, a seat pipe 4, a bracket lug 5 (see FIG. 3), a chain stay 6, a rear fork 7, and so on. The front wheel 11 is rotatably attached to the lower end of the front fork 2. The handlebar stem 12 and the handlebar 13 are inserted into the head pipe 1 from above so as to rotate integrally with the front fork 2. The saddle 9 is attached to the upper end of a seat pillar 8 having been inserted into the seat pipe 4. The pedals 14 are rotatably attached to the two ends of a crank 15 to receive a pedal force as human power. The motor drive unit 20 rotatably supports a crank shaft 16 to which the pedals 14 are attached via the crank 15. The rear wheel 21 is rotatably attached to the rear end of the chain stay 6.

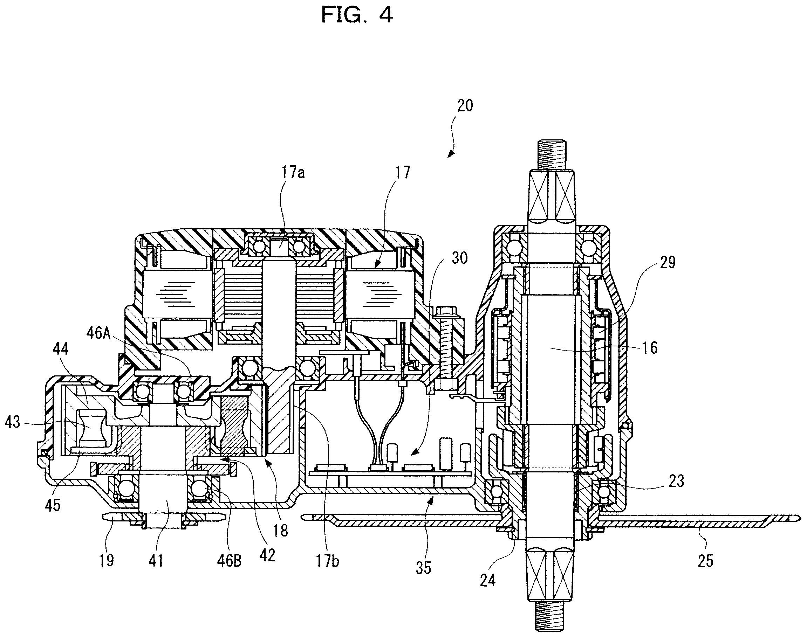

As shown in FIG. 4, the motor drive unit 20 includes an electric motor 17 that generates an auxiliary driving force, a speed reducing mechanism 18, an auxiliary-driving-force output sprocket 19 serving as an auxiliary-driving-force output ring body, a torque sensor 29 that detects a pedal force from the pedals 14, a control part 30, a unit case 35, and so on. The speed reducing mechanism 18 is composed of a speed reducing gear part 17b of a motor output shaft 17a, a speed reducing gear 44, and so on. The auxiliary-driving-force output sprocket 19 is attached to the end of an auxiliary-driving-force output shaft 41, which is rotatably supported by bearings 46A and 46B, to output an auxiliary driving force.

As shown in FIGS. 1 and 4 and so on, the battery 22 is disposed between the seat pipe 4 and the rear wheel 21 to feed power to the electric motor 17 and so on. The front sprocket 25 is connected to the crank shaft 16 via a crank one-way clutch 23 and a rotary shaft 24 for attaching the sprocket. The front sprocket 25 is arranged to be rotatable even when the crank shaft 16 is stopped. As shown in FIG. 2, the rear sprocket 26 is attached to a rear hub 40 serving as the hub of the rear wheel 21, and is fixed to the rear hub 40 (specifically, a rotating part in the rear hub 40) so as to rotate integrally with the rear wheel 21. The driving force transmitting chain 27 is engaged with the front sprocket 25, the auxiliary-driving-force output sprocket 19, and the rear sprocket 26 to transmit human power from the front sprocket 25 and an auxiliary driving force from the auxiliary-driving-force output sprocket 19 to the rear sprocket 26. The cover 28 covers the front sprocket 25, the upper portion of the driving force transmitting chain 27, and the motor drive unit 20 from the sides of the electric bicycle. The tensioner device 39 absorbs slack of the driving force transmitting chain 27.

The motor drive unit 20 detects a pedal force from the pedals 14 by means of the torque sensor 29 provided in the motor drive unit 20 and outputs an auxiliary driving force generated by the electric motor 17 according to the pedal force via the auxiliary-driving-force output sprocket 19. The human power and the auxiliary driving force are applied to the driving force transmitting chain 27 and are transmitted to the rear wheel 21 via the rear sprocket 26 and so on. This configuration enables the electric bicycle to be smoothly driven uphill.

As shown in FIG. 4, the motor drive unit 20 contains the control part 30 including a control board for performing various control operations such as generation of an auxiliary driving force, a memory, and so on. As shown in FIG. 3, the motor drive unit 20 is fixed near the bracket lug 5 of the skeleton frame 10 via suspension brackets 20a and 20b. Thus, the motor drive unit 20 is located at an intermediate position (so-called center portion) between the front wheel 11 and the rear wheel 21. Reference numeral 31 in FIGS. 2 and 10 to 13 denotes a guide pulley that guides a winding angle, at which the driving force transmitting chain 27 is engaged with the auxiliary-driving-force output sprocket 19, to a larger angle. In the present embodiment, the torque sensor 29 is provided in the motor drive unit 20, but the location of the torque sensor 29 is not particularly limited. The torque sensor 29 may be provided outside the motor drive unit 20.

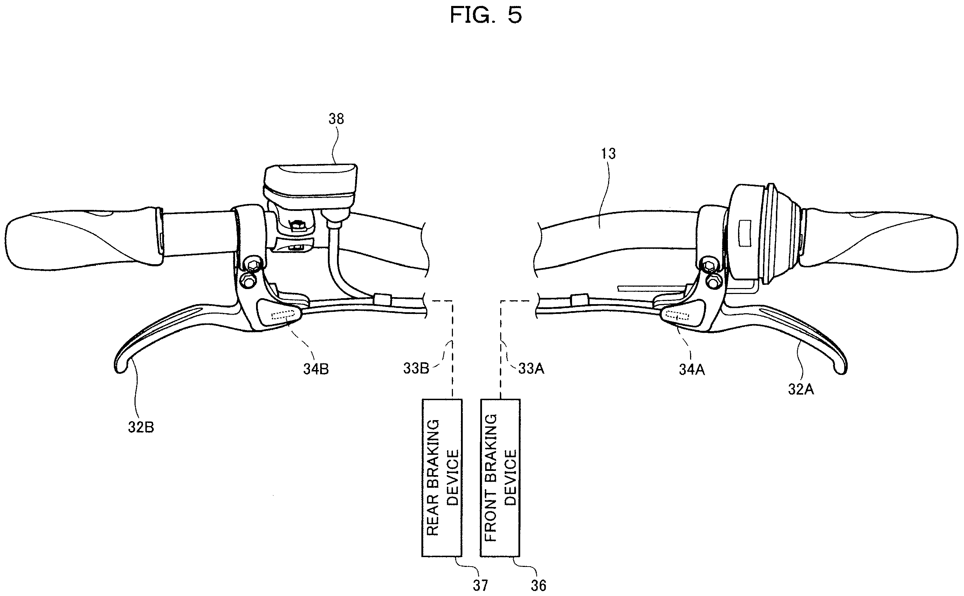

As shown in FIG. 5, left and right brake levers 32 (32A, 32B) are attached below grips attached to the two ends of the handlebar 13 while being rotatably supported. To the brake lever 32A on one side (for example, on the right), a front braking device 36 is connected via a brake wire 33A so as to physically synchronize with the brake lever 32A. The front braking device 36 mechanically applies a braking force to the front wheel 11. To the other brake lever 32B (for example, on the left), a rear braking device 37 is connected via a brake wire 33B so as to physically synchronize with the brake lever 32B. The rear braking device 37 mechanically applies a braking force to the rear wheel 21. The electric bicycle is configured so as to perform a regeneration operation for generating regenerative electric power by means of the electric motor 17 during a braking operation to charge the battery 22. An operating part 38 is attached to a portion of the handlebar 13. The operating part 38 includes a plurality of switch buttons (not shown) for electrically rotating on or off an operation of adding an auxiliary driving force (so-called assisting operation), and so on. Further, brake switches 34A and 34B for detecting operating states of the brake levers 32A and 32B are placed on portions to which the brake levers 32A and 32B are attached. The brake switches 34A and 34B detect the operating states of the brake levers 32A and 32B while being controlled by the control part 30 to properly perform a regenerative charging function.

When the electric bicycle according to the embodiment of the present invention runs while the pedals 14 are not pressed and a pedal force is hardly detected, a passive rotary driving force received by the rear wheel 21 from the ground plane is transmitted to the driving force transmitting chain 27 via the rear sprocket 26, as will be described later. The passive rotary driving force is transmitted via the auxiliary-driving-force output sprocket 19 and so on of the motor drive unit 20 to rotate the electric motor 17. Under these circumstances, when the brake levers 32(32A, 32B) are operated and this state is detected by the brake switches 34A and 34B, control is performed by the control part 30 for a regeneration operation. At this point, a rotation of the electric motor 17 is used to perform a regeneration operation, thereby charging the battery 22. Even in a state where the pedals 14 are not pressed, the driving force transmitting chain 27 is driven (moved) in line with a rotation of the rear wheel 21. However, since the crank one-way clutch 23 is interposed between the front sprocket 25 and the crank shaft 16, the crank shaft 16, the crank 15, and the pedals 14 are not rotated.

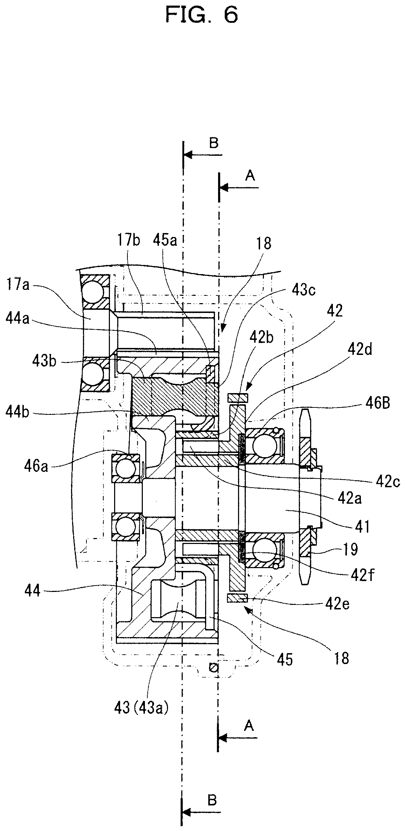

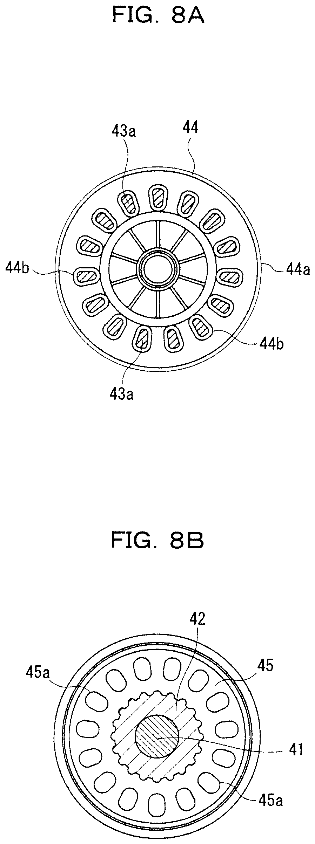

As shown in FIGS. 4 and 6, in the electric bicycle according to the embodiment of the present invention, on a force transmission path between the motor output shaft 17a of the electric motor 17 and the auxiliary-driving-force output shaft 41 with the auxiliary-driving-force output sprocket 19 attached thereto in the motor drive unit 20, provided are not only the speed reducing gear 44 of the speed reducing mechanism 18 but also an input/output changeover clutch 42, a damper 43, a torque transmission plate 45, and so on. The input/output changeover clutch 42 switches a direction in which a force is transmitted, between the electric motor 17 and the auxiliary driving force output sprocket 19. The damper 43 reduces a shock during clutch connection by the input/output changeover clutch 42. The torque transmission plate 45 supports one side of the damper 43 and has an inner diameter portion splined into an outer ring 42b (see FIGS. 6, 8(b), and 9) of the input/output changeover clutch 42.

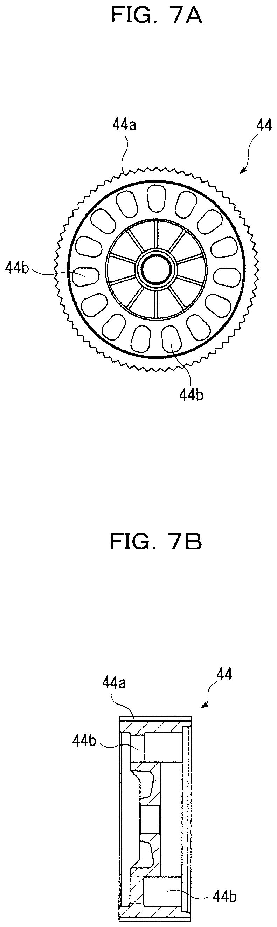

As shown in FIGS. 6 to 9, the speed reducing gear 44 of the speed reducing mechanism 18 is made of synthetic resin, and has a gear surface 44a formed on the outer periphery of the speed reducing gear 44 and a plurality of insertion holes 44b radially arranged in the center portion along the periphery of the speed reducing gear 44. The gear surface 44a is engaged with the speed reducing gear part 17b of the motor output shaft 17a. The damper 43 is made of an elastic material such as rubber or synthetic rubber and has a thick circular body part 43a. First protrusions 43b and second protrusions 43c are formed at predetermined angles along the periphery of the thick circular body part 43a so as to laterally protrude from the thick circular body part 43a. The first protrusions 43b of the damper 43 are inserted into the insertions holes 44b of the speed reducing gear 44, so that a force is transmitted between the speed reducing gear 44 and the damper 43. Further, a plurality of insertion holes 45a are formed along the periphery of the torque transmission plate 45 so as to extend in the radial direction of the torque transmission plate 45. The second protrusions 43c of the damper 43 are inserted into the insertion holes 45a of the torque transmission plate 45, so that a force is transmitted between the damper 43 and the torque transmission plate 45. Moreover, the body part 43a of the damper 43 is recess-shaped with a curved cross section such that the outer surface and inner surface of the body part 43a of the damper 43 are likely to be deformed when being twisted.

The input/output changeover clutch 42 includes a body part having the outer ring 42b that receives an auxiliary driving force from the electric motor 17, an inner ring 42c that outputs an auxiliary driving force, a roller 42a that includes a plurality of engaging elements disposed between the members, and so on (any of which are simplistically shown in the drawings), a retainer 42d that retains the roller 42a at regular intervals along the periphery of the roller 42a, a shoe 42e that contacts the retainer 42d on the outer periphery of the retainer 42d, a washer 42f that retains the retainer 42d at a predetermined position, and so on. The input/output changeover clutch 42 switches a lock direction by means of the shoe 42e holding or releasing the retainer 42d in synchronization with a braking operation or an instructing operation by an instructing part such as the switch buttons for a predetermined regeneration operation of the electric bicycle.

Specifically, the input/output changeover clutch 42 switches between an output state and an input state by means of the shoe 42e. In the output state, an auxiliary driving fore can be outputted from the electric motor 17 when the shoe 42 releases the retainer 42d. In the input state, a passive rotary driving force received by the rear wheel 21 from the ground plane can be inputted to the electric motor 17 via the driving force transmitting chain 27 when the shoe 42e holds the retainer 42d.

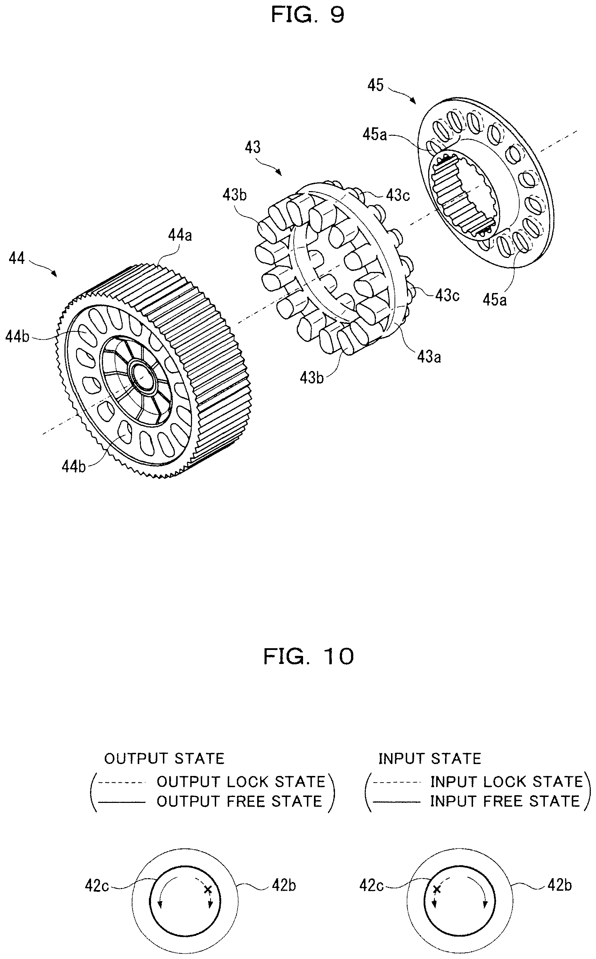

FIG. 10 is a simplified drawing showing the states of the outer ring 42b and the inner ring 42c in the input and output states of the input/output changeover clutch 42. In the drawing, the right surfaces of the rings are viewed from the sides along a traveling direction. As shown in the left side of FIG. 10, in the case where the input/output changeover clutch 42 is in the output state, the inner ring 42c of the input/output changeover clutch 42 is prohibited from rotating rightward relative to the outer ring 42b of the input/output changeover clutch 42, which is an output lock state, whereas the inner ring 42c of the input/output changeover clutch 42 is allowed to rotate leftward relative to the outer ring, which is an output free state. Further, as shown in the right side of FIG. 10, in the case where the input/output changeover clutch 42 is in the input state, the inner ring 42c of the input/output changeover clutch 42 is allowed to rotate rightward relative to the outer ring 42b of the input/output changeover clutch 42, which is an input free state, whereas the inner ring 42c of the input/output changeover clutch 42 is prohibited from rotating leftward relative to the outer ring, which is an input lock state.

In the above-described configuration, operations of the driving force transmitting chain 27, the auxiliary-driving-force output sprocket 19, the front sprocket 25, the rear sprocket 26, and so on will be described below. In the following explanation, as shown in FIGS. 1 and 11 to 13, the right surface of the electric bicycle is viewed from the side along the traveling direction. In the drawings, reference numeral E denotes the ground plane. Further, in the drawings, a tensioned part of the driving force transmitting chain 27 is indicated by a solid line, and a slack part of the driving force transmitting chain 27 is indicated by a dotted line.

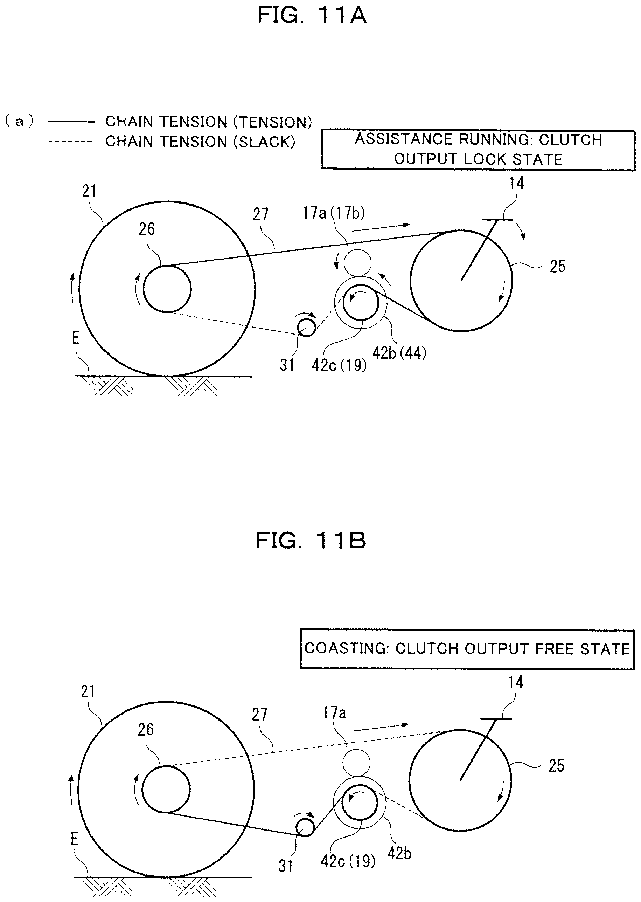

In assistance running in which an auxiliary driving force from the electric motor 17 is added to human power from the pedals 14, as shown in FIG. 11(a) in which the right surface is viewed from the side along the traveling direction, the pedals 14 and the front sprocket 25 are rotated rightward and the electric motor 17 is driven to rotate the motor output shaft 17a and the speed reducing gear part 17b rightward. Accordingly, the speed reducing gear 44, the torque transmission plate 45, and the outer ring 42b of the input/output changeover clutch 42 are rotated leftward. At this point, the input/output changeover clutch 42 is in the output state with the shoe 42e released from the retainer 42d. In this state, even if the inner ring 42c of the input/output changeover clutch 42 is about to rotate leftward at a slower speed than the outer ring 42b of the input/output changeover clutch 42 rotated leftward (that is, relatively rotate rightward), the inner ring cannot rotate leftward, resulting in the output lock state. Thus, the inner ring 42c of the input/output changeover clutch 42 is also rotated leftward, so that the driving force transmitting chain 27 is pulled by the inner ring 42c of the input/output changeover clutch 42, the auxiliary-driving-force output sprocket 19, and the front sprocket 25 so as to move clockwise to rotate the rear sprocket 26 rightward. Accordingly, the rear wheel 21 is rotated rightward and human power and an auxiliary driving force are added, so that the electric bicycle runs.

Also during coasting in which the electric bicycle runs only by inertia, for example, the electric bicycle runs only by inertia with the pedals 14 stopped on the flat ground, the input/output changeover clutch 42 is turned to the output state. During coasting, as shown in FIG. 11(b), the rear wheel 21 on the ground rotates rightward, so that the rear sprocket 26 rotates rightward and the driving force transmitting chain 27 is pulled so as to move clockwise. Consequently, the auxiliary-driving-force output sprocket 19 and the inner ring 42c of the input/output changeover clutch 42 rotate leftward. However, since the electric motor 17 stops, the outer ring 42b of the input/output changeover clutch 42 is also about to stop. At this point, the inner ring 42c of the input/output changeover clutch 42 is about to rotate leftward relative to the outer ring 42b of the input/output changeover clutch 42 but the input/output changeover clutch 42 is kept in the output state, resulting in the output free state. Thus, only the inner ring 42c of the input/output changeover clutch 42 rotates leftward in the free state. Further, the front sprocket 25 is rotated rightward in line with the driving force transmitting chain 27 moving clockwise. However, since the crank one-way clutch 23 is provided on the crank shaft 16, the pedals 14 are stopped with a rider's foots on the pedals 14. As described above, during coasting, the electric motor 17 stops and the input/output changeover clutch 42 is in the free state. Thus, the driving force transmitting chain 27 lightly moves, so that coasting is satisfactorily performed.

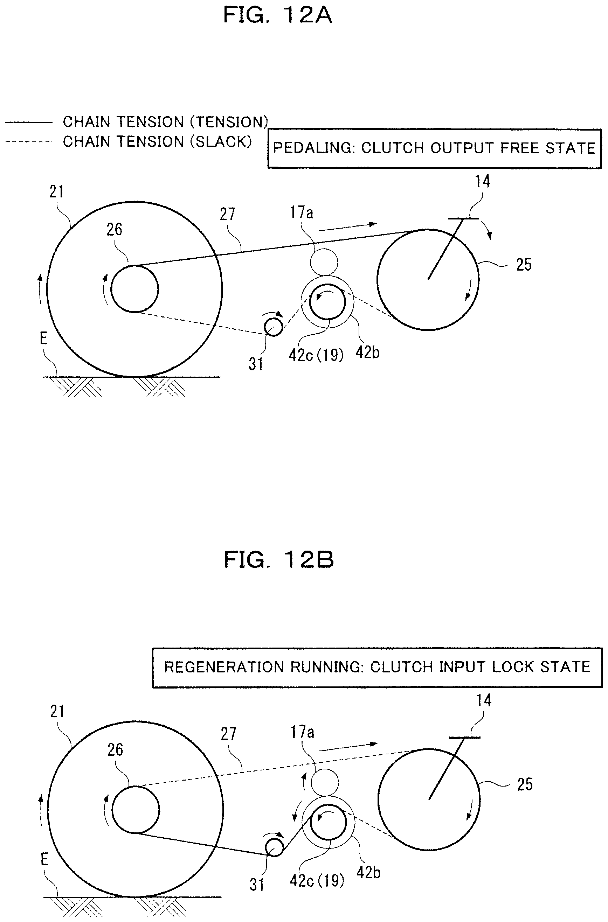

In the case where the electric bicycle runs at relatively high speed or an assisting operation is cancelled by operating the operating part 38, the electric bicycle runs only by human power without assistance. Also during running without assistance (pedaling), the input/output changeover clutch 42 is turned to the output state. During running without assistance, as shown in FIG. 12(a), the pedals 14 and the front sprocket 25 are rotated rightward, and thus the auxiliary-driving-force output sprocket 19 and the inner ring 42c of the input/output changeover clutch 42 are rotated leftward. However, since the electric motor 17 stops, the outer ring 42b of the input/output changeover clutch 42 is about to stop. At this point, since the input/output changeover clutch 42 is kept in the output state, resulting in the output free state. Thus, the inner ring 42c of the input/output changeover clutch 42 rotates leftward in the free state. The driving force transmitting chain 27 is pulled by the front sprocket 25 so as to move clockwise. The rear sprocket 26 rotates rightward, and thus the rear wheel 21 is rotated rightward only by human power for running.

Meanwhile, when the brake levers 32 (32A, 32B) are operated from coasting or running without assistance (pedaling), the electric bicycle is turned to a regeneration state. During regeneration running, the retainer 42d is held by the shoe 42e in contact with the retainer 42d at a predetermined position. Thus, the input/output changeover clutch 42 is turned to the input state, and as will be described later, a passive driving force transmitted from the rear wheel 21 is transmitted to the electric motor 17 while, in the case of rotating in the opposite direction, the input/output changeover clutch 42 is turned to the free state.

Specifically, during regeneration running, as shown in FIG. 12(b), the grounded rear wheel 21 having received a passive driving force from the ground plane E rotates rightward. Accordingly, the rear sprocket 26 rotates rightward and the driving force transmitting chain 27 is pulled so as to move clockwise. Consequently, the auxiliary-driving-force output sprocket 19 and the inner ring 42c of the input/output changeover clutch 42 rotate leftward. Since the electric motor 17 stops, the outer ring 42b of the input/output changeover clutch 42 is about to stop. However, since the input/output changeover clutch 42 is in the input state, in the case where the outer ring 42b of the input/output changeover clutch 42 is about to rotate rightward relative to the inner ring 42c of the input/output changeover clutch 42 while the inner ring 42c rotates leftward, the input/output changeover clutch 42 is turned to the input lock state and the outer ring 42b of the input/output changeover clutch 42 rotates leftward integrally with the inner ring 42c. Thus, the speed reducing gear part 17b and the motor output shaft 17a are rotated rightward and the electric motor 17 is rotated by the passive driving force to perform a regeneration operation for charging the battery 22.

When the electric bicycle coasting or running without assistance (pedaling) is switched to a regeneration state by operating the brake levers 32 (32A, 32B), the input/output changeover clutch 42 is switched from the output state (more specifically, the output free state) to the input state (more specifically, the input lock state). The electric bicycle is switched from a state in which the electric motor 17 is stopped and the speed reducing gear 44 hardly rotates to a state in which the speed reducing gear 44 and the electric motor 17 are forcibly rotated. Thus, when the speed reducing gear 44 is directly fixed to the input/output changeover clutch 42, a large shock and sound may occur on the input/output changeover clutch 42 during clutch switching, providing a rider with an uncomfortable or unpleasant feeling. However, according to the present invention, since the damper 43 for reducing a shock during clutch connection is provided on the transmission path between the motor output shaft 17a of the electric motor 17 and the auxiliary-driving-force output shaft 41 (between the speed reducing gear 44 and the torque transmission plate 45 in the present embodiment), even when the electric bicycle is switched to regeneration running, a shock and sound during clutch connection are reduced, thereby preventing a rider from feeling uncomfortable or unpleasant.

Since a shock during clutch connection is reduced, reduction in the life spans of the components provided on the force transmission path between the motor output shaft 17a and the auxiliary driving force output shaft 41 is minimized, so that the life span of the electric bicycle can be extended as compared to an electric bicycle having no damper.

During regeneration running, the front sprocket 25 is rotated rightward with the clockwise movement of the driving force transmitting chain 27 but the pedals 14 with a rider's foots thereon are stopped by the crank one-way clutch 23 provided on the crank shaft 16. Thus, during regeneration running, the electric motor 17 is favorably rotated with a passive driving force but the pedals 14 can be stopped, preventing a rider from feeling uncomfortable.

When the brake levers 32 (32A, 32B) are operated to switch the electric bicycle from assistance running to regeneration running, the input/output changeover clutch 42 is switched from the output state (more specifically, the output lock state) to the input state (more specifically, the input lock state). Thus, a larger shock and sound may occur on the input/output switchover clutch 42 with the speed reducing gear 44 directly fixed thereto during clutch switching, providing a rider with an uncomfortable or unpleasant feeling. However, according to the present invention, since the damper 43 for reducing a shock during clutch connection is provided, even when the electric bicycle is switched from assistance running to regeneration running, a shock and sound during clutch connection can be effectively reduced, preventing a rider from feeling uncomfortable or unpleasant.

Conversely, when the operation of the brake levers 32 is cancelled (stopped) to switch the electric bicycle from regeneration running to assistance running, the input/output changeover clutch 42 is switched from the input state (more specifically, the input lock state) to the output state (more specifically, the output lock state). Even in this case, a larger shock and sound may occur on the input/output changeover clutch 42 with the speed reducing gear 44 directly fixed thereto during clutch switching, providing a rider with an uncomfortable or unpleasant feeling. However, according to the present invention, since the damper 43 for reducing a shock during clutch connection is provided, even when the electric bicycle is switched from regeneration running to assistance running, a shock and sound during clutch connection can be more effectively reduced, preventing a rider from feeling uncomfortable or unpleasant.

When the electric bicycle is switched from coasting or running without assistance (pedaling) to assistance running, the input/output changeover clutch 42 is kept in the output state but switched from the output free state to the output lock state. At this point, a shock may occur on the input/output changeover clutch 42, providing a rider with a certain degree of uncomfortable or unpleasant feeling. However, according to the present invention, since the damper 43 for reducing a shock during clutch connection is provided, even when the electric bicycle is switched from the output free state to the output lock state during running, a shock during clutch connection can be reduced, preventing a rider from feeling uncomfortable or unpleasant.

The movements of the members when a rider dismounts from and pushes the electric bicycle to move forward are almost the same as those in the case of coasting shown in FIG. 11(b). However, the pedals 14 without the rider's foots thereon rotate rightward together with the front sprocket 25.

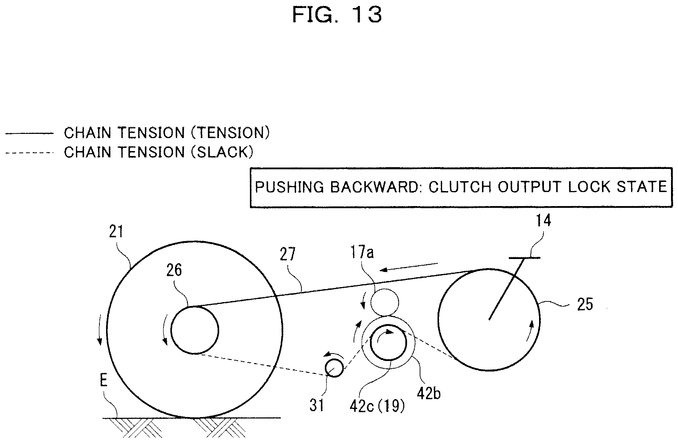

When a rider dismounts from and pushes the electric bicycle to move backward, as shown in FIG. 13, the grounded rear wheel 21 rotates leftward, and thus the rear sprocket 26 rotates leftward and the driving force transmitting chain 27 is pulled so as to move counterclockwise. Consequently, the front sprocket 25 rotates leftward while the inner ring 42c of the input/output changeover clutch 42 rotates rightward. At this point, in a state where the brake levers 32 are not operated, the input/output changeover clutch 42 is in the output state. Thus, when the inner ring 42c of the input/output changeover clutch 42 rotates rightward, the outer ring 42b of the input/output changeover clutch 42 is turned to the output lock state and rotates rightward with the inner ring 42c, so that the motor output shaft 17a of the electric motor 17 rotates leftward. Hence, when a rider dismounts from and pushes the electric bicycle to move backward, the electric bicycle can be moved backward even with the rotating electric motor 17 without any troubles.

In the above-described configuration, since the damper 43 for reducing a shock during clutch connection is provided on the transmission path between the motor output shaft 17a of the electric motor 17 and the auxiliary-driving-force output shaft 41, a shock and sound during clutch connection can be reduced, preventing a rider from feeling uncomfortable or unpleasant in any of the following cases where: the electric bicycle is switched to regeneration running and the input/output changeover clutch 42 is connected; the electric bicycle is switched from regeneration running to assistance running; and the electric bicycle is switched from coasting or running without assistance (pedaling) to assistance running. Further, this configuration can prevent a shock from being rapidly applied to the components provided on the transmission path between the motor output shaft 17a of the electric motor 17 and the auxiliary-driving-force output shaft 41, thereby minimizing reduction in the life spans of the components. Moreover, a thick component (gear) having an extremely large strength and so on are not required as the components provided on the transmission path between the motor output shaft 17a of the electric motor 17 and the auxiliary-driving-force output shaft 41, so that the size of the motor drive unit 20 can be reduced.

The damper 43 for reducing a shock during clutch connection can reduce a shock applied on the driving force transmitting chain 27 when the pedals 14 are rapidly pressed at the start and the output torque of the electric motor 17 is rapidly increased. This configuration can reduce a shock felt by a rider and provide the rider with a more comfortable ride. Even when the electric bicycle is frequently switched between assistance running and running without assistance because of the relationship between the pedal force of the pedals 14 and the vehicle speed and so on, an impact force such as jerky movement (fluctuations in a short period) applied to a rider can be reduced, so that a comfortable ride can be achieved.

In the present embodiment, the control part 30 controls the regenerative charging function to be properly performed while the operating state of the brake levers 32A and 32B is detected. The present embodiment is not limited to this and can be also applied to the case where the regeneration operation is electrically turned on or off by the switch buttons provided on the operating part 38. In this case, the regeneration operation may be cancelled when the pedals 14 are pressed with a force equal to or larger than predetermined torque.

In the present embodiment, the chain (driving force transmitting chain 27) is used as an endless driving force transmitting member for transmitting a pedal force from the pedals 14 to the rear wheel. The endless driving force transmitting member is not particularly limited. The chain may be replaced with a synchronous belt. Further, in the case where a synchronous belt (driving force transmitting synchronous belt) is used, the auxiliary-driving-force output sprocket 19 may be replaced with an auxiliary-driving-force output gear as an auxiliary-driving-force output ring body for outputting an auxiliary driving force. The rear sprocket 26 may be replaced with a rear gear as a rear ring body.

In the present embodiment, the front sprocket (so-called crank gear) as a human power output ring body is directly connected to the hub of the rear wheel 21. The configuration is not particularly limited. That is, as long as a rotation of the rear wheel can be transmitted to the front sprocket 25 during running, an outer gear box or inner gear box may be provided on the hub of the rear wheel. As an inner gear box contained in the hub of the rear wheel, the structure of Japanese Patent Laid-Open No. 2010-95203 disclosed by the present applicant is most suitable. However, the inner gear box is not particularly limited.

### Industrial Applicability

The present invention is applicable to various electric bicycles which are capable of applying an auxiliary driving force and performing a regeneration operation and include a motor drive unit located in the center.

## Claims

1. An electric bicycle which can be driven by an auxiliary driving force generated by an electric motor (17) fed with power from a battery (22) in addition to human power generated by a pedal force from pedals (14) and perform a regeneration operation for charging the battery (22) by using a passive driving force received by a rear wheel (21) from a ground plane during passive running to rotate the electric motor (17), the electric bicycle comprising:
a motor drive unit (20) including the electric motor (17), an auxiliary-driving-force output ring body (19) for outputting an auxiliary driving force, and a control part (30) located at an intermediate position between a front wheel (11) and the rear wheel (21); and
an endless driving force transmitting member (27) for transmitting a pedal force from the pedals (14) to the rear wheel (21), the endless driving force transmitting member (27) being capable of transmitting a passive driving force received by the rear wheel (21) during the passive running and being engaged with the auxiliary-driving-force output ring body (19) of the motor drive unit (20); **characterized in that**
the electric bicycle further comprises
an input/output changeover clutch (42) for switching a force transmission direction and a damper (43) provided on a force transmission path between a motor output shaft (17a) serving as an output shaft of the electric motor (17) and an auxiliary driving force output shaft (41) with the auxiliary-driving-force output ring body (19) attached thereto in the motor drive unit (20), wherein
the input/output changeover clutch (42) is switched between an output state in which a driving force of the electric motor (17) can be transmitted to the auxiliary-driving-force output shaft (41) and an input state in which the passive driving force from the rear wheel (21) can be transmitted to the electric motor (17), and
the damper (43) reduces a shock during clutch connection.

2. The electric bicycle according to claim 1, wherein when the electric bicycle is switched from coasting or running without assistance to regeneration running, the input/output changeover clutch (42) is switched from an output free state in which a rotation of the auxiliary-driving-force output ring body (19) of the motor drive unit (20) is not transmitted to the electric motor (17) in the output state to an input lock state in which the passive driving force from the rear wheel (21) is transmitted to the electric motor (17) in the input state, and the damper (43) reduces a shock during clutch connection when the output free state is switched to the input lock state.

3. The electric bicycle according to claim 1, wherein when the electric bicycle is switched from assistance running to regeneration running, the input/output changeover clutch (42) is switched from an output lock state in which a driving force of the electric motor (17) is transmitted to the auxiliary-driving-force output shaft (41) in the output state to an input lock state in which the passive driving force from the rear wheel (21) is transmitted to the electric motor (17) in the input state, and the damper (43) reduces a shock during clutch connection when the output lock state is switched to the input lock state.

4. The electric bicycle according to claim 1, wherein when the electric bicycle is switched from regeneration running to assistance running, the input/output changeover clutch (42) is switched from an input lock state in which the passive driving force from the rear wheel (21) is transmitted to the electric motor (17) in the input state to an output lock state in which a driving force of the electric motor (17) is transmitted to the auxiliary-driving-force output shaft (41) in the output state, and the damper (43) reduces a shock during clutch connection when the input lock state is switched to the output lock state.

5. The electric bicycle according to claim 1, wherein when the electric bicycle is switched from coasting or running without assistance to assistance running, the input/output changeover clutch (42) is switched from an output free state in which a rotation of the auxiliary-driving-force output ring body (19) of the motor drive unit (20) is not transmitted to the electric motor (17) in the output state to an output lock state in which a driving force of the electric motor (17) is transmitted to the auxiliary-driving-force output shaft (41) in the output state, and the damper (43) reduces a shock during clutch connection when the output free state is switched to the output lock state.

6. The electric bicycle according to any one of claims 1 to 5, wherein
the regeneration operation is performed in synchronization with a braking operation.

## Patentansprüche

1. Elektrisches Fahrrad, das mit einer Hilfsantriebskraft angetrieben werden kann, die von einem Elektromotor (17) erzeugt wird, der von einer Batterie (22) mit Energie gespeist wird, zusätzlich zu einer Menschenkraft, die von einer Pedalkraft von Pedalen (14) erzeugt wird, und das einen Regenerationsvorgang zum Laden der Batterie (22) unter Verwendung einer passiven Antriebskraft durchführen kann, die von dem Hinterrad (21) von einer Bodenebene während des passiven Laufs aufgenommen wird, um den Elektromotor (17) zu drehen, wobei das elektrische Fahrrad umfasst:
eine Motorantriebseinheit (20), die den Elektromotor (17) beinhaltet, einen Hilfsan-triebskraft-Ausgaberingkörper (19) zum Ausgeben einer Hilfsantriebskraft, und einen Steuerteil (30), der in einer Zwischenposition zwischen einem Vorderrad (11) und dem Hinterrad (21) angeordnet ist; und
ein Endlos-Antriebskraft-Übertragungselement (27) zum Übertragen einer Pedalkraft von den Pedalen (14) auf das Hinterrad (21), wobei das Endlos-Antriebskraft-Übertragungselement (27) dazu in der Lage ist, eine passive Antriebskraft zu übertragen, die von dem Hinterrad (21) während des passiven Laufs aufgenommen wird und dazu, mit dem Hilfsantriebskraft-Ausgaberingkörper (19) der Motorantriebseinheit (20) in Eingriff gebracht zu werden; **dadurch gekennzeichnet, dass**
das elektrische Fahrer des Weiteren umfasst
eine Eingangs-/Ausgangs-Umschaltkupplung (42) zum Umschalten einer Kraftübertragungsrichtung und einen Dämpfer (43), der an einem Kraftübertragungsweg zwischen einer Motorausgangswelle (17a), die als Ausgangswelle des Elektromotors (17) dient, und einer Hilfsantriebskraft-Ausgangswelle (41) angeordnet ist, wobei der Hilfsantriebskraft-Ausgaberingkörper (19) daran in der Motorantriebseinheit (20) befestigt ist, wobei
die Eingangs-/Ausgangs-Umschaltkupplung (42) zwischen einem Ausgangszustand, in dem eine Antriebskraft des Elektromotors (17) auf die HilfsantriebskraftAusgangswelle (41) übertragen werden kann, und einem Eingangszustand, in dem die passive Antriebskraft von dem Hinterrad (21) auf den Elektromotor (17) übertragen werden kann, umgeschaltet wird, und wobei der Dämpfer (43) Stöße während der Kupplungsverbindung reduziert.

2. Elektrisches Fahrrad nach Anspruch 1, wobei, wenn das elektrische Fahrrad aus dem Ausrollen oder Fahren ohne Unterstützung in den Regenerationsbetrieb umgeschaltet wird, die Eingangs-/Ausgangs-Umschaltkupplung (42) von einem ausgabefreien Zustand, in dem eine Drehung des Hilfsantriebskraft-Ausgaberingkörpers (19) der Motorantriebseinheit (20) nicht auf den Elektromotor (17) in dem Ausgangszustand übertragen wird, auf einen Eingangssperrzustand umgeschaltet wird, in dem die passive Antriebskraft von dem Hinterrad (41) auf den Elektromotor (17) in dem Eingangszustand übertragen wird, und der Dämpfer (43) Stöße während der Kupplungsverbindung reduziert, wenn der ausgabefreie Zustand auf den Eingangssperrzustand umgeschaltet wird.

3. Elektrisches Fahrrad nach Anspruch 1, wobei, wenn das elektrische Fahrrad aus dem Hilfsantriebsbetrieb in den Regenerationsbetrieb umgeschaltet wird, die Eingangs/Ausgangs-Umschaltkupplung (42) aus einem Ausgangssperrzustand, in dem eine Antriebskraft des Elektromotors (17) auf die Hilfsantriebskraft-Ausgangswelle (41) in dem Ausgangszustand übertragen wird, auf einen Eingangssperrzustand umgeschaltet wird, in dem die passive Antriebskraft von dem Hinterrad (41) auf den Elektromotor (17) in dem Eingangszustand übertragen wird, und der Dämpfer (43) Stöße während der Kupplungsverbindung reduziert, wenn der Ausgangssperrzustand auf den Eingangssperrzustand umgeschaltet wird.

4. Elektrisches Fahrrad nach Anspruch 1, wobei, wenn das elektrische Fahrrad aus dem Regenerationsbetrieb in den Hilfsantriebsbetrieb umgeschaltet wird, die Eingangs/Ausgangs-Umschaltkupplung (42) aus einem Eingangssperrzustand, in dem die passive Antriebskraft von dem Hinterrad (21) auf den Elektromotor (17) in dem Eingangszustand übertragen wird, auf einen Ausgangssperrzustand umgeschaltet wird, in dem eine Antriebskraft des Elektromotors (17) auf die Hilfsantriebskraft-Ausgangswelle (41) in dem Ausgangszustand übertragen wird, und der Dämpfer (43) Stöße während der Kupplungsverbindung reduziert, wenn der Eingangssperrzustand auf den Ausgangssperrzustand umgeschaltet wird.

5. Elektrisches Fahrrad nach Anspruch 1, wobei, wenn das elektrische Fahrrad aus dem Ausrollen oder Fahren ohne Unterstützung in den Hilfsantriebsbetrieb umgeschaltet wird, die Eingangs-/Ausgangs-Umschaltkupplung (42) von einem ausgabefreien Zustand, in dem eine Drehung des Hilfsantriebskraft-Ausgaberingkörpers (19) der Motorantriebseinheit (20) nicht auf den Elektromotor (17) in dem Ausgangszustand übertragen wird, auf einen Ausgangssperrzustand umgeschaltet wird, in dem eine Antriebskraft des Elektromotors (17) auf die Hilfsantriebskraft-Ausgangswelle (41) in dem Ausgangszustand übertragen wird, und der Dämpfer (43) Stöße während der Kupplungsverbindung reduziert, wenn der ausgabefreie Zustand auf den Ausgangssperrzustand umgeschaltet wird.

6. Elektrisches Fahrrad nach einem der Ansprüche 1 bis 5, wobei der Regenerationsvorgang in Synchronisation mit einem Bremsvorgang durchgeführt wird.

## Revendications

1. Un vélo électrique pouvant être entraîné par une force motrice auxiliaire produite par un moteur électrique (17) alimenté en énergie par une batterie (22) en plus de la puissance humaine générée par une force de pédalage des pédales (14) et effectuer une opération de régénération pour charger la batterie (22) par l'utilisation d'une force motrice passive reçue par une roue arrière (21) depuis un plan au sol lors du roulage passif pour faire tourner le moteur électrique (17), le vélo électrique comprenant :
une unité d'entrainement du moteur (20) comportant le moteur électrique (17), un corps annulaire (19) de sortie de la force motrice auxiliaire pour la transmission de la force motrice auxiliaire, et une pièce de commande (30) située en une position intermédiaire entre une roue avant (11) et la roue arrière (21); et un élément sans fin de transmission de la force motrice (27) pour transmettre la force de pédalage des pédales (14) à la roue arrière (21), l'élément sans fin de transmission de la force motrice (27) étant en mesure de transmettre une force motrice passive reçue de la roue arrière (21) pendant le roulage passif, et engagé avec le corps annulaire (19) de sortie de la force motrice auxiliaire de l'unité d'entrainement du moteur (20); **caractérisé en ce que**
le vélo électrique comprend de plus
un embrayage de commutation d'entrée/sortie (42) pour commuter le sens de transmission de la force et un amortisseur (43) disposé sur un chemin de transmission de la force entre un arbre de sortie du moteur (17a) servant d'arbre de sortie du moteur électrique (17) et un arbre de sortie de la force motrice auxiliaire (41) auquel est relié le corps annulaire (19) de sortie de la force motrice auxiliaire dans l'unité d'entrainement du moteur (20), où
l'embrayage de commutation d'entrée/sortie (42) est commuté entre un état de sortie dans lequel une force motrice du moteur électrique (17) peut être transmise à l'arbre de sortie de la force motrice auxiliaire (41) et un état d'entrée dans lequel la force motrice passive de la roue arrière (21) peut être transmise au moteur électrique (17), et
l'amortisseur (43) réduit le choc lors du basculement de l'embrayage.

2. Le vélo électrique selon la revendication 1, où quand le vélo électrique est commuté de roue libre ou de roulage sans assistance au roulage en régénération, l'embrayage de commutation d'entrée/sortie (42) est commuté d'un état libre de sortie dans lequel une rotation du corps annulaire (19) de sortie de la force motrice auxiliaire de l'unité d'entrainement du moteur (20) n'est pas transmise au moteur électrique (17) dans l'état de sortie vers un état de verrouillage d'entrée dans lequel la force motrice passive provenant de la roue arrière (21) est transmise au moteur électrique (17) dans l'état d'entrée, alors que l'amortisseur (43) réduit un choc lors de la commutation de l'embrayage au passage de l'état libre de sortie à l'état de verrouillage d'entrée.

3. Le vélo électrique selon la revendication 1, où quand le vélo électrique est commuté du roulage en assistance vers le roulage en régénération, l'embrayage de commutation d'entrée/sortie (42) est commuté d'un état de verrouillage de sortie dans lequel une force motrice du moteur électrique (17) est transmise à l'arbre de sortie (41) de la force motrice auxiliaire dans l'état de sortie vers un état de verrouillage d'entrée dans lequel la force motrice passive provenant de la roue arrière (21) est transmise au moteur électrique (17) dans l'état d'entrée, et l'amortisseur (43) réduit un choc lors de la commutation d'embrayage quand l'état de verrouillage de sortie est commuté vers l'état de verrouillage d'entrée.

4. Le vélo électrique selon la revendication 1, où quand le vélo électrique est commuté du roulage en régénération vers le roulage en assistance, l'embrayage de commutation d'entrée/sortie (42) est commuté d'un état de verrouillage d'entrée dans lequel la force motrice passive provenant de la roue arrière (21) est transmise au moteur électrique (17) dans l'état d'entrée vers un état de verrouillage de sortie dans lequel la force motrice du moteur électrique (17) est transmise à l'arbre de sortie (41) de la force motrice auxiliaire dans l'état de sortie, et l'amortisseur (43) réduit un choc lors de la commutation d'embrayage quand l'état de verrouillage d'entrée est commuté vers l'état de verrouillage de sortie.

5. Le vélo électrique selon la revendication 1, où quand le vélo électrique est commuté de roue libre ou de roulage sans assistance vers le roulage en assistance, l'embrayage de commutation d'entrée/sortie (42) est commuté d'un état libre de sortie dans lequel une rotation du corps annulaire (19) de sortie de la force motrice auxiliaire de l'unité d' entrainement du moteur (20) n'est pas transmise au moteur électrique (17) dans l'état de sortie à un état de verrouillage de sortie dans lequel une force motrice du moteur électrique (17) est transmise à l'arbre de sortie (41) de la force motrice auxiliaire dans l'état de sortie, et l'amortisseur (43) réduit un choc lors de la commutation de l'embrayage quand l' état libre de sortie est commuté vers l'état de verrouillage de sortie.

6. Le vélo électrique selon une des revendications 1 à 5, où l'opération de régénération est effectuée en synchronisation avec une opération de freinage.
